# EUROPEAN PATENT APPLICATION

(11) **EP 4 844 618 A1**
(43) Date of publication of application: **25.11.2026**
(21) Application number: 26179191.7
(22) Date of filing: 18.05.2026
(51) Int. Cl.: G06F 21/64, H04L 9/32, H04L 9/00

(54) **BLOCKCHAIN-BACKED PROVENANCE TRACKING FOR MACHINE GENERATED ARTIFACT USING MULTI-LEVEL CHECKSUMS**

(30) Priority: 19.05.2025 US 202519211497
(71) Applicant: Fair Isaac Corporation, Minneapolis, MN 55402 (US)
(72) Inventor: Zoldi, Scott Michael, Minneapolis (US); Nalborski, Krzysztof Michal, Minneapolis (US)
(74) Representative: Müller-Boré & Partner Patentanwälte PartG mbB

(57) **Abstract**

A computer-implemented method for provenance identification of machine-generated artifacts, the method comprising: receiving a machine-generated artifact generated by a model; generating a content-based checksum for the machine-generated artifact, wherein the content-based checksum is a cryptographic hash computed for the machine-generated artifact; querying a first database using the content-based checksum to determine whether the artifact corresponds to previously recorded generated content, wherein the first database stores a plurality of content-based checksums corresponding to machine-generated artifacts previously generated by one or more models; in response to detecting a match in the first database, determining whether the artifact corresponds to a predefined set of common syntax patterns; and in response to determining that the artifact does not correspond to a common syntax pattern, marking the machine-generated artifact as a candidate for provenance tracking. 529209576v.1

## Description

### TECHNICAL FIELD

The subject matter described herein relates to data provenance systems, and more particularly to digital systems for managing the identification and tracking of machine-generated contents using checksum-based techniques and blockchain storage.

### BACKGROUND

Generative artificial intelligence (GenAl) models, such as large language models (LLMs), are increasingly used to produce machine-generated outputs across various domains including documentation, content creation, and software development. One prominent use case involves generating software source code in response to user prompts, allowing developers to accelerate implementation tasks or prototype solutions more efficiently.

Despite these advantages, the integration of LLM-generated outputs into software development workflows introduces several technical challenges. Foremost among them is the difficulty in discerning whether a given segment of code was authored by a human or automatically generated by an AI system. This lack of visibility impairs downstream processes that depend on understanding the origin and context of each content, including auditing, quality assurance, versioning, and IP lifecycle management.

Compounding this issue is the possibility that the same generated output may appear across different users or projects without clear attribution or coordination. In collaborative or regulated environments, this can result in content reuse without awareness or traceability, making it difficult to assess the uniqueness or recurrence of a particular content or artifact across deployments.

Moreover, conventional development tools typically do not provide mechanisms for determining whether a specific line or block of code originated from a model, was reused in multiple contexts, or was derived from prior automated outputs. This gap hinders organizations from establishing reliable records of how, when, and by whom machine-generated artifacts or contents were introduced, making it harder to manage the risks associated with reuse or model dependence.

Therefore, there is a need for technical frameworks that can identify, track, and record the provenance of machine-generated contents generated by language models, in a way that supports reproducibility, transparency, and lifecycle oversight within modern development environments.

### SUMMARY

Methods, systems, and articles of manufacture, including computer program products, are provided for provenance identification of machine-generated artifacts. Provided herein is a method comprising: generating a content-based checksum for a piece of machine-generated artifact, wherein the content-based checksum is a cryptographic hash computed for the machine-generated artifact; querying a first database using the content-based checksum to determine whether the artifact corresponds to previously recorded generated content, wherein the first database stores a plurality of content-based checksums corresponding to machine-generated artifacts previously generated by one or more models; in response to detecting a match in the first database, determining whether the artifact corresponds to a predefined set of common syntax patterns; and in response to determining that the artifact does not correspond to a common syntax pattern, marking the machine-generated artifact for provenance tracking by associating the artifact with one or more provenance metadata fields.

In some variations, the method further includes retrieving metadata associated with the machine-generated artifact, the metadata comprising at least a user identifier and a generation timestamp; generating a contextual line checksum by applying a cryptographic hash to a combination of the machine-generated artifact and the retrieved metadata, querying a second database using the contextual line checksum to determine whether the artifact has previously been committed to a provenance tracking record, wherein the second database stores contextual line checksums corresponding to previously committed artifacts, and generating a provenance tracking record for the machine-generated artifact, in response to determining that the contextual line checksum does not exist in the second database, and marking the machine-generated artifact as previously committed, in response to detecting that the contextual line checksum exists in the second database.

In some variations, generating the contextual line checksum includes: concatenating textual content of the machine-generated artifact with a user identifier and a generation timestamp in a predefined order to form an input string; and applying a cryptographic hash function to the input string.

In some variations, the method further includes generating a file-level checksum based on a plurality of contextual line checksums corresponding to a set of machine-generated artifacts, and recording the file-level checksum on a blockchain ledger to provide immutable provenance verification for the set of machine-generated artifacts.

In some variations, generating the file-level checksum includes ordering the plurality of contextual line checksums based on a predefined sequence of the corresponding machine-generated artifacts; and applying a cryptographic hash function to the ordered sequence to produce the file-level checksum.

In some variations, the method further includes associating the file-level checksum with a project identifier and a version identifier to form a provenance bundle corresponding to a composite artifact; and storing the provenance bundle in association with a project-level record to enable project-level traceability.

In some variations, the method further includes identifying the machine-generated artifact as reuse-sensitive content, in response to determining that the contextual line checksum corresponds to multiple metadata entries indicating generation of a same artifact by multiple users or at multiple timestamps.

In another aspect, there is provided a system comprising: a programmable processor; and a non-transient machine-readable medium storing instructions that, when executed by the processor, cause the at least one programmable processor to perform operations. The operations include generating a content-based checksum for a piece of machine-generated artifact, wherein the content-based checksum is a cryptographic hash computed for the machine-generated artifact; querying a first database using the content-based checksum to determine whether the artifact corresponds to previously recorded generated content, wherein the first database stores a plurality of content-based checksums corresponding to machine-generated artifacts previously generated by one or more models; in response to detecting a match in the first database, determining whether the artifact corresponds to a predefined set of common syntax patterns; and in response to determining that the artifact does not correspond to a common syntax pattern, marking the machine-generated artifact for provenance tracking by associating the artifact with one or more provenance metadata fields.

In another aspect, there is provided a computer program product including a non-transitory computer readable medium storing instructions that, when executed by at least one programmable processor, cause the at least one programmable processor to perform operations. The operations include generating a content-based checksum for a piece of machine-generated artifact, wherein the content-based checksum is a cryptographic hash computed for the machine-generated artifact; querying a first database using the content-based checksum to determine whether the artifact corresponds to previously recorded generated content, wherein the first database stores a plurality of content-based checksums corresponding to machine-generated artifacts previously generated by one or more models; in response to detecting a match in the first database, determining whether the artifact corresponds to a predefined set of common syntax patterns; and in response to determining that the artifact does not correspond to a common syntax pattern, marking the machine-generated artifact for provenance tracking by associating the artifact with one or more provenance metadata fields.

Implementations of the current subject matter can include, but are not limited to, methods consistent with the descriptions provided herein as well as articles that include a tangibly embodied machine-readable medium operable to cause one or more machines (e.g., computers, etc.) to result in operations implementing one or more of the described features. Similarly, computer systems are also described that may include one or more processors and one or more memories coupled to the one or more processors. A memory, which can include a computer-readable storage medium, may include, encode, store, or the like one or more programs that cause one or more processors to perform one or more of the operations described herein. Computer implemented methods consistent with one or more implementations of the current subject matter can be implemented by one or more data processors residing in a single computing system or multiple computing systems. Such multiple computing systems can be connected and can exchange data and/or commands or other instructions or the like via one or more connections, including but not limited to a connection over a network (e.g. the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims. The claims that follow this disclosure are intended to define the scope of the protected subject matter.

### DESCRIPTION OF DRAWINGS

The accompanying drawings, which are incorporated in and constitute a part of this specification, show certain aspects of the subject matter disclosed herein and, together with the description, help explain some of the principles associated with the disclosed implementations. In the drawings,
FIG. 1 is a diagram illustrating an example process flow for identifying and classifying a machine-generated artifact generated from a prompt using a generative model, in accordance with one or more embodiments of the current subject matter.
FIG. 2 is a diagram illustrating an example process for registering and updating provenance-related records associated with individual machine-generated artifacts generated by a generative model, in accordance with one or more embodiments of the current subject matter.
FIG. 3 is a diagram illustrating an example process for constructing and immutably recording a file-level checksum based on a plurality of machine-generated artifacts generated by a generative model, in accordance with one or more embodiments of the current subject matter.
FIG. 4 is a diagram illustrating an example traceability matrix used to assess and classify lines of machine-generated artifacts generated by a generative model, in accordance with one or more embodiments of the current subject matter.
FIG. 5 is a block diagram illustrating an example computing system that may be used to implement components of the provenance tracking framework, in accordance with one or more embodiments of the current subject matter.
FIG. 6 is a flowchart illustrating a computer-implemented process for provenance identification of machine-generated artifacts, including checksum generation, classification, and blockchain anchoring, in accordance with one or more embodiments of the current subject matter.

When practical, like labels are used to refer to same or similar items in the drawings.

### DETAILED DESCRIPTION

The details of one or more variations of the subject matter described herein are set forth in the accompanying drawings. A *machine-generated artifact* refers to any digital output produced, in whole or in part, by an automated system or computational model, including but not limited to natural language text, configuration files, structured prompts, visual content (e.g., images, diagrams), audio segments, model-generated embeddings, and serialized data objects. Such artifacts may be expressed in textual, visual, auditory, or encoded binary formats, and may be subject to provenance tracking based on their content, context of generation, or associated metadata. In some embodiments, a machine-generated artifact refers to a discrete unit of textual output generated by a language model in response to a prompt. The artifact may comprise a natural language statement, a structured expression, or a segment of formatted syntax, and may be evaluated or tracked individually for purposes of provenance identification or reuse detection. In some embodiments, a machine-generated artifact may include any digital content that can be represented as a stable textual sequence, such as source code lines (e.g., Python, Java, SQL), configuration files (e.g., JSON, YAML, XML), query and rule expressions (e.g., SQL queries, regular expressions, XPath), document fragments (e.g., HTML or Markdown), machine-generated prompts or summaries, structured logging outputs (e.g., JSON logs, stack traces), and serialized artifacts from machine learning workflows (e.g., model configuration files or feature transformation expressions). The term provenance, as used herein, refers to metadata and historical context used to identify the source, creation conditions, and generation record of a machine-generated artifact. Provenance information may include who generated the artifact, when it was generated, and whether the artifact has appeared in prior outputs.

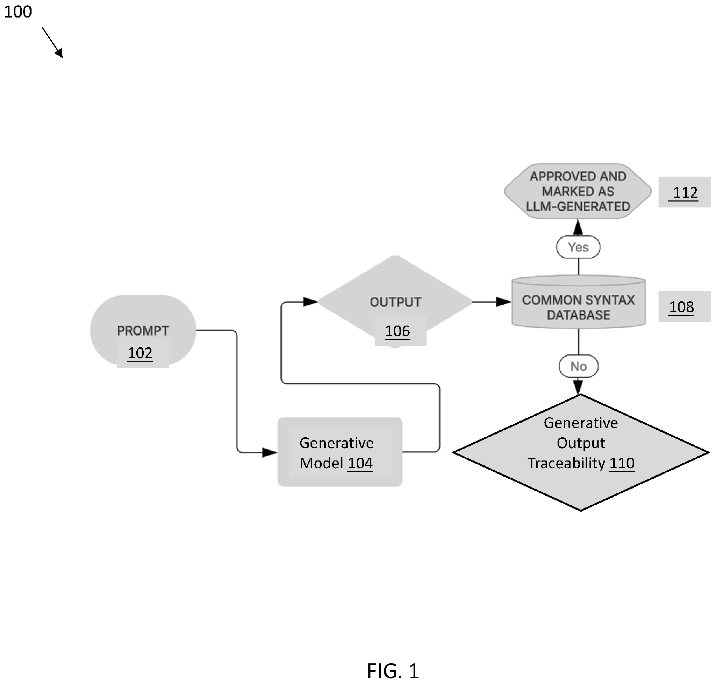

FIG. 1 illustrates an example process flow 100 for identifying and classifying a machine-generated artifact generated from a prompt using a generative model, according to some embodiments of the approach described herein.

The prompt 102 may refer to a user-supplied input that initiates a generative process. In some embodiments, the prompt 102 may include a textual instruction or query provided to a generative model for producing one or more outputs. The format and content of the prompt may vary depending on application context and use case.

The generative model 104 may be any computational model configured to generate machine-generated artifacts in response to a prompt. For example, the generative model 104 may comprise a large language model (LLM) trained on a corpus of text to generate output by predicting token sequences. In some embodiments, the generative model 104 may correspond to a publicly available LLM or a focused language model (FLM) that is fine-tuned or trained from scratch on domain-specific data within an organization. An FLM may be trained on curated internal code repositories to promote consistency with organizational standards and to reduce generation of hallucinated or non-compliant outputs

The output 106 may refer to a candidate artifact produced by the generative model 104. In some embodiments, the output 106 may be received for further evaluation, including whether it conforms to common syntax or represents a previously generated artifact.

The common syntax database 108 may store a predefined set of textual patterns, phrases, or code structures that are considered non-unique or widely used in conventional programming. For example, the database may include reserved keywords, built-in functions, or operators from a selected programming language (e.g., Python) and its associated libraries. In some embodiments, entries in the common syntax database 108 may be curated and approved by an organization's governance team, such as one led by a chief AI and analytics officer (CAO), to reflect language standards permitted for productization. The database may be implemented as a NoSQL system to flexibly support varying syntax structures and efficient pattern lookups across diverse data types.

The generative output traceability 110 may refer to a module or process that initiates one or more operations for establishing provenance of a given output that does not match known common syntax. In some embodiments, the generative output traceability 110 may include computing a content-based checksum or contextual line checksum, querying one or more databases, or generating a provenance tracking record for the output 106. The term "provenance" as used herein may refer to metadata and historical context used to identify the source, creation conditions, and generation record of a machine-generated artifact. In some embodiments, a machine-generated artifact refers to a discrete unit of textual output generated by a language model in response to a prompt. The artifact may comprise a natural language statement, a structured expression, or a segment of formatted syntax, and may be evaluated or tracked individually for purposes of provenance identification or reuse detection. As used herein, a "machine-generated artifact" refers to a unit of textual output generated by a language model, which may include a line of code, a sentence, or a structured expression.

The approval marker 112 may refer to a status assigned to a given output upon verification that the output matches a known entry in the common syntax database. In some embodiments, outputs may be explicitly labeled as having been generated by a language model and deemed sufficiently common to bypass further provenance operations.

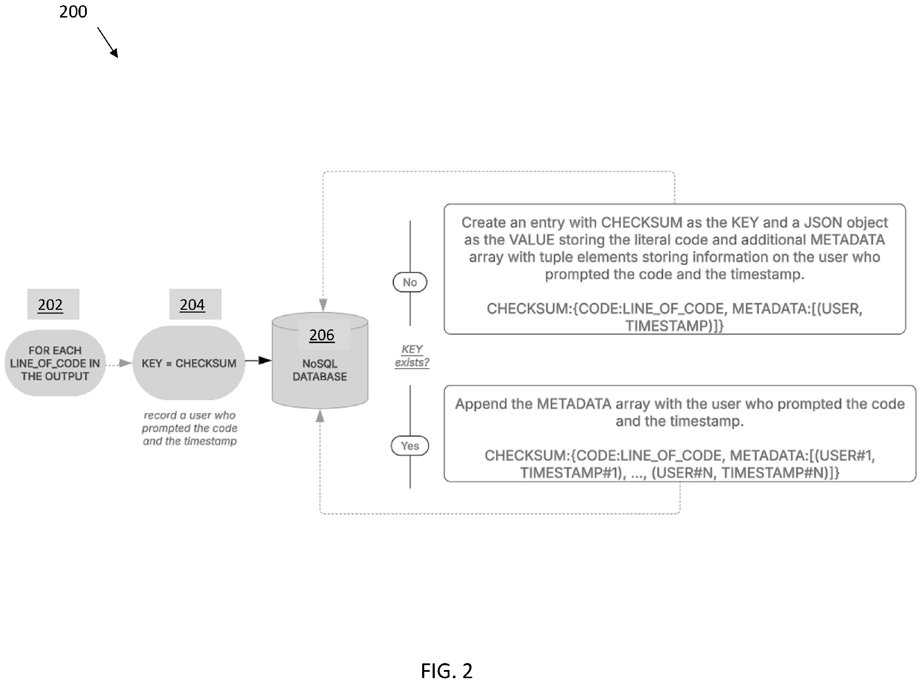

FIG. 2 illustrates an example process flow 200 for registering and updating provenance-related records associated with individual machine-generated artifacts generated by a generative model, according to some embodiments of the approach described herein.

At block 202, the system may iterate over each textual unit within the output produced in response to a prompt submitted to the generative model. In some embodiments, such units may correspond to individual lines, clauses, or structurally delimited segments of text that are subject to provenance identification. The objective of this step is to isolate the atomic content elements that are to be uniquely registered for future tracking and traceability.

At block 204, a content-based checksum may be generated for each identified unit. As used herein, the term "content-based checksum" refers to a cryptographic hash computed solely from the textual content of a machine-generated artifact, without incorporating any metadata or contextual information. In some embodiments, standard secure hash algorithms such as SHA-2 or SHA-3 may be used to compute the checksum. The resulting checksum serves as a unique, fixed-length identifier that facilitates efficient lookup and deduplication in downstream processes. The generation of the checksum may be performed using deterministic hashing to ensure that identical content always maps to the same checksum value.

In addition to generating the checksum, the system may also capture and associate metadata with the corresponding machine-generated artifact. In some embodiments, the metadata comprises at least a user identifier, indicating the individual or system that submitted the original prompt leading to generation of the output, and a generation timestamp, indicating when the artifact was generated. These fields may be used to support temporal and user-specific tracking of generated content. The combination of the content-based checksum and associated metadata enables a mapping between the artifact and its generation context.

At block 206, the content-based checksum may be used as a lookup key to query a persistent data structure implemented using a NoSQL database. In some embodiments, the NoSQL database is selected due to its support for flexible key-value mappings and its ability to store nested, schema-less records such as metadata arrays. If the queried key does not exist in the database, the system may create a new entry in which the checksum acts as the key, and the value comprises a structured object storing both the literal machine-generated artifact and an array of metadata entries. The metadata array may contain a tuple of the form (user, timestamp), representing the generation context for that artifact. In this case, a new provenance record is created for the previously unrecorded artifact.

If the checksum does exist in the database, the system may interpret this as an indication that the same textual content has been previously generated. In such cases, rather than creating a new record, the system may append an additional (user, timestamp) tuple to the existing metadata array associated with the checksum. This update operation effectively records that the same artifact has been independently generated more than once, potentially across different users or at different times. This allows the system to distinguish between single-instance and recurring generation patterns, which may support later inference tasks regarding reuse or commonality.

In some embodiments, the metadata array may also be extended to include additional contextual fields. For example, each (user, timestamp) tuple may further reference a specific analytic tracking document (ATD) associated with the workflow in which the artifact was produced. Additionally, the metadata may include a pointer to a repository reference indicating the broader system or codebase where the artifact is integrated. These additional fields may be used to enhance traceability and support auditability of artifacts in multi-user or multi-project environments.

The database described in this process is separate from the common syntax database and stores content-based checksums and associated metadata. In some embodiments, this database is configured to support versioned storage, time-based queries, and secure record update operations. The cumulative metadata associated with each checksum may serve as evidence for generation provenance, recurrence frequency, and temporal propagation of artifacts generated by approved language models.

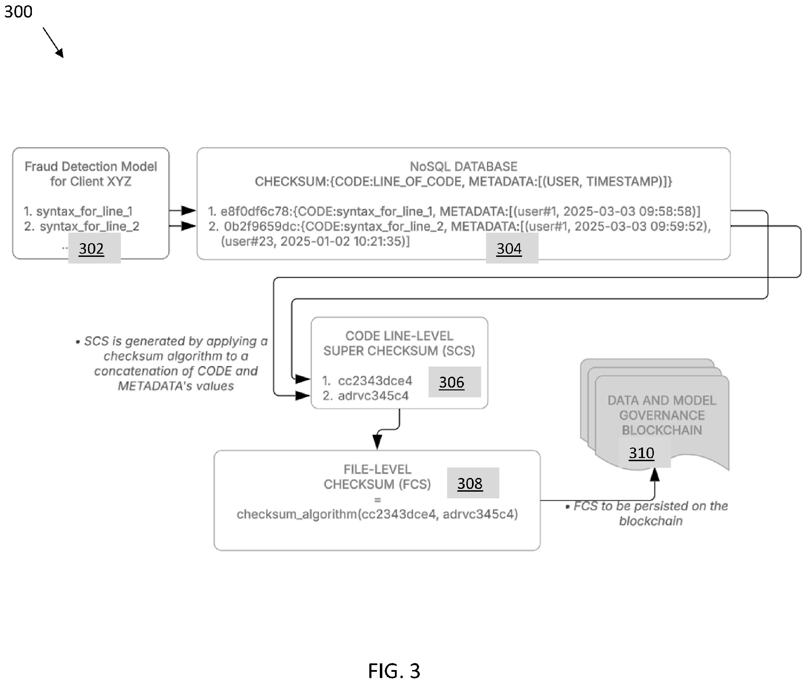

FIG. 3 illustrates an example process flow 300 for constructing and immutably recording a file-level checksum (FCS) based on a plurality of machine-generated artifacts generated by a language model, according to some embodiments of the approach described herein.

At block 302 representing a source code file from a repository, the system may retrieve, from a persistent storage system such as a NoSQL database, a set of entries corresponding to content-based checksums previously generated for a plurality of machine-generated artifacts. Each artifact may correspond to an output segment generated in response to a user prompt, and each checksum may act as a unique identifier for the corresponding textual content. In some embodiments, a content-based checksum may be computed using a cryptographic hash function applied solely to the text of the artifact, thereby providing a content-specific fingerprint.

Each entry retrieved from the database may include, in addition to the artifact itself, one or more metadata records that describe the context of generation. The metadata may include, for example, a user identifier and a generation timestamp. In some cases, the metadata may further comprise additional elements such as a reference to a repository or an analytic tracking document (ATD) used during artifact generation. This metadata may be stored as an array of tuples, each capturing a distinct instance of the artifact being produced by a user at a particular time.

At block 304, the system may generate a super checksum (SCS) for each machine-generated artifact. In some embodiments, a super checksum (SCS), i.e., a contextual line checksum, may be generated by applying a cryptographic hash to a combination of the artifact content and one or more metadata elements, such as user identifiers and generation timestamps. This checksum incorporates both semantic content and contextual provenance information, thereby serving as a granular fingerprint for provenance tracking. The combination may be ordered based on a predefined sequence, such as chronological order, to ensure determinism

For example, if a given artifact has been produced multiple times by different users, the system may concatenate the artifact's text with each (user, timestamp) pair in chronological order and apply a hash function to the resulting composite string. This allows the SCS to reflect both the artifact's content and its generation history. As a result, identical content generated at different times or by different individuals may yield different SCS values, enhancing traceability and differentiation.

In some embodiments, the contextual line checksum may be evaluated against the number or diversity of metadata entries associated with a given machine-generated artifact. If the metadata array for a content-based checksum indicates that the same line of content has been generated by multiple users or at different times, the artifact may be flagged as reuse-sensitive content. For example, a line of generative model output that appears in two or more contextual line checksum records - each having distinct user or timestamp metadata - may indicate repeated generation of the same artifact across different contexts. This reuse pattern may reflect either prompt-level convergence or potential generative replication across teams, and may prompt further review or audit in certain traceability workflows.

At block 306, the system may assemble the set of SCS values corresponding to the collection of artifacts associated with a given software artifact, such as a file or module. These SCS values may then be ordered based on a predefined sequence that reflects the intended structure or logical flow of the artifacts.

At block 308, the system may generate a file-level checksum (FCS) by applying a cryptographic hash function to the ordered sequence of SCS values. The FCS may serve as a compact digital fingerprint for the entire artifact set, enabling verification of its composition and history. In some embodiments, the FCS provides a deterministic representation of a specific artifact arrangement, including the exact content and provenance history of each contributing element.

At block 310, the FCS may be recorded on a data and model governance blockchain. In some embodiments, this blockchain serves as an immutable ledger that provides tamper-resistant storage of file-level provenance records. The recorded entry may also include project-level identifiers such as a version label or a unique system reference. The blockchain, via the FCS records, allows for verifying the integrity of the NoSQL database from FIG. 2.

If the same FCS is later generated from a different user session or project, the blockchain system may append a new record referencing the same FCS while preserving the historical record. Due to the cryptographic linking of blocks, prior entries cannot be altered, and any changes to the underlying data structure (e.g., the NoSQL database) that result in an FCS mismatch can be detected.

In some embodiments, the file-level checksum may be associated with one or more identifiers such as a project identifier and a version identifier. This association may form what is referred to herein as a provenance bundle, which may correspond to a composite artifact that represents a structured collection of multiple machine-generated artifacts (e.g., a source code file or software module). In some embodiments, the provenance bundle may include: (i) a file-level checksum; (ii) one or more contextual line checksums; (iii) project identifier; and (iv) version identifier.

For example, a provenance bundle may include: a file-level checksum computed over a set of contextual line checksums, a project identifier corresponding to the software system or application under development, and a version identifier indicating a release or build version.

In some implementations, this provenance bundle may be stored in association with a project-level record within a registry or governance system to enable traceability across multiple software versions or releases. The stored provenance bundle may serve as an immutable reference to validate which generative model outputs have been incorporated into production code over time. The file-level checksum enables version control, tamper detection, and auditability at the document or module level, even if individual lines remain unchanged.

By combining content-based hashing, contextual metadata, and blockchain anchoring, the approach described herein may enable organizations to determine when and how specific machine-generated artifacts were generated, and to verify the integrity and origin of such artifacts during auditing, certification, or productization workflows.

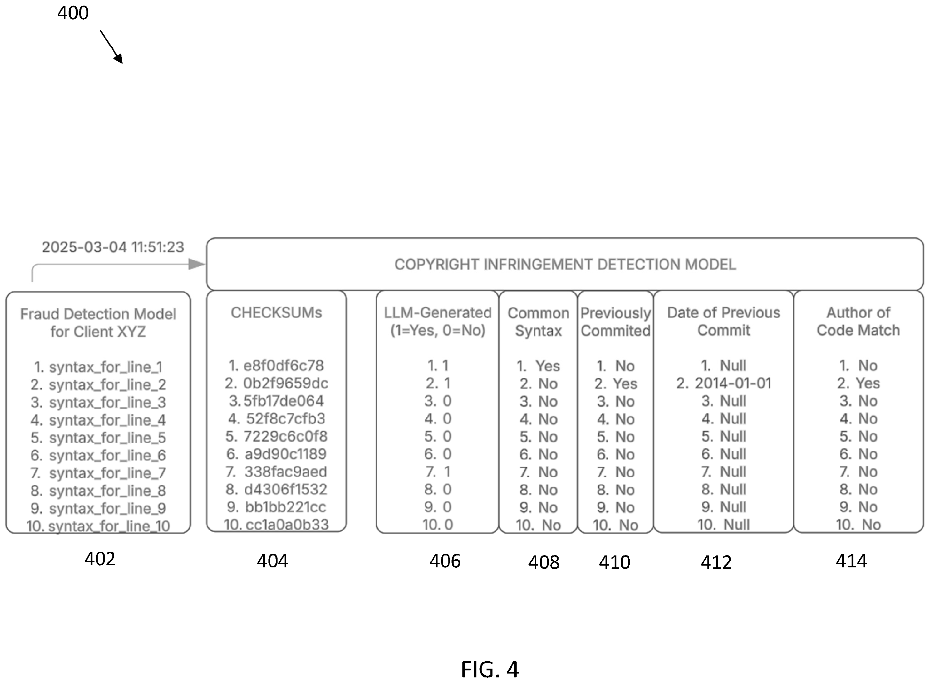

FIG. 4 illustrates an example traceability matrix 400 used in the approach described herein to assess and classify lines of machine-generated artifacts generated by a generative model, for example, a focused language model (FLM) or a large language model (LLM). The matrix may be constructed and stored during a provenance identification workflow applied to a software artifact-here, an illustrative "fraud detection model for Client XYZ."

At the leftmost portion of FIG. 4, block 402 represents a set of output lines associated with the artifact. These lines (e.g., syntax_for_line_1 to syntax_for_line_10) may be generated either wholly or partially through the use of a generative model. In some embodiments, a machine-generated artifact refers to any syntactically valid textual unit-such as a sentence, clause, instruction, or code expression-produced in response to a user-provided prompt.

Each line is first transformed into a corresponding **content-based checksum,** as shown in column 404. As described earlier, a content-based checksum may be computed by applying a cryptographic hash function, such as SHA-256, to the content of the artifact. This checksum acts as a unique and compact identifier for the artifact's content, independent of its source or context. The checksum may be used to query a database storing known generated artifacts to determine whether the artifact has been previously observed or committed, as further described below.

Column 406 includes a binary classification result labeled **LLM-Generated,** which may be determined based on a match against a known repository of generated artifacts. A value of "1" indicates that the artifact is classified as having been generated by a model, while a "0" indicates no such classification. This binary flag may be derived from a variety of detection techniques including checksum matching, prompt traceability, and generative model fingerprinting.

Column 408 indicates whether each line corresponds to a **common syntax** pattern. In some embodiments, the common syntax database may comprise a curated set of commonly used syntactic templates, reserved keywords, and standardized expressions drawn from widely adopted programming libraries or frameworks. For example, in the context of software generation, this database may include elements such as language-specific control structures, type declarations, or import statements. A match in this database may indicate that the artifact likely represents generic content and may not pose a provenance or originality concern.

Column 410 captures whether the artifact has been **previously committed to a code repository.** In some embodiments, this check may involve querying a second database storing contextual line checksums (i.e., super checksums or SCSs) along with associated provenance tracking records. A "Yes" value in this column indicates that the artifact has been previously recorded and committed by at least one user at a known timestamp. The system may leverage this information to identify reuse patterns or shared generative activity across users or projects.

Column 412 displays the **date of previous commit** corresponding to each previously recorded artifact. This field may remain null if the artifact has not been previously committed to a code repository. Where present, the date provides temporal context that may be used to establish priority, sequence of generation, or detect suspicious timing patterns.

Finally, column 414 indicates whether there is a match in terms of the **author of the artifact,** based on metadata included in the provenance tracking record. A value of "Yes" may signify that the user submitting the artifact for verification is the same individual recorded as a prior generator of the artifact. This may be useful in distinguishing between legitimate reuse and unauthorized copying of generated content across different users or projects.

The table in FIG. 4, as a whole, reflects the evaluation results for a batch of artifacts processed under the approach described herein. For example, row 1 corresponds to syntax_for_line_1, which is associated with a checksum of e8f17df6c78, marked as model-generated, identified as a common syntax pattern, not previously committed, and without a known author match. In contrast, row 2 shows a line that is model-generated but not part of the common syntax set, and it has been previously committed on 2014-01-01 by the same author, indicating reuse by the original contributor.

In some embodiments, the matrix may be automatically constructed during a batch verification process and used by a provenance tracking system to make downstream decisions such as:
- Whether a file-level checksum (FCS) should be created or updated;
- Whether any lines require additional review due to potential risk of unauthorized reuse;
- Whether the artifact's eligibility for copyright registration may be impacted by the presence of previously committed or widely shared generated content.

The structured format of the traceability matrix may also support audit trails, internal compliance verification, and user-facing transparency mechanisms, such as usage dashboards or reporting interfaces.

By integrating various levels of artifact-level analysis-including model generation flags, syntactic classification, reuse history, and author identity-the matrix may enable organizations to establish a granular, data-backed record of artifact provenance. This may be particularly valuable in contexts where legal, regulatory, or intellectual property policies require clear boundaries between human-created and generatively assisted components of a software or machine-generated asset. Unlike traditional version control systems that track file diffs without context, the described approach records generative lineage with user-linked hash evidence, enabling stronger attribution and compliance support.

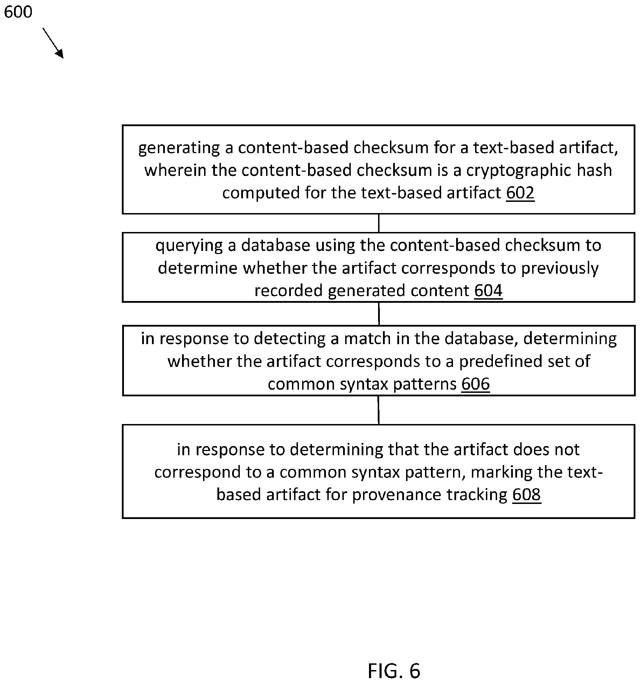

FIG. 6 illustrates a flowchart of a computer-implemented process 600 for provenance identification of machine-generated artifacts, as may be performed by one or more computing systems executing instructions stored on one or more computer-readable storage devices.

At block 602, the process begins by generating a content-based checksum for a machine-generated artifact. In some embodiments, a machine-generated artifact may refer to a sequence of model-generated output text intended for further use in application logic, configuration, or content development. The content-based checksum is a cryptographic hash value computed solely based on the literal content of the artifact, serving as a fingerprint for identifying identical outputs across different contexts.

At block 604, the system queries a first database using the content-based checksum to determine whether the artifact corresponds to previously recorded generated content. The first database may store a plurality of content-based checksums, each associated with artifacts previously generated by one or more generative models. This operation enables detection of content repetition or reuse at the artifact level.

Upon detecting a match in the database, at block 606, the system determines whether the artifact corresponds to a predefined set of common syntax patterns. These patterns may be defined by an organization as part of a common syntax database and may include non-protectable elements such as language-specific keywords, templated constructs, or non-substantive formatting strings that do not warrant provenance tracking. The determination may involve comparing the matched artifact with a curated set of such patterns.

At block 608, if the artifact is not found to correspond to a common syntax pattern, the system marks the artifact for provenance tracking. This designation may trigger subsequent processes for deeper provenance registration, such as metadata binding, contextual hashing, or blockchain anchoring.

In some embodiments, the system may perform additional operations following the marking of an artifact as a provenance candidate. These may include:
- Retrieving metadata associated with the artifact, such as a user identifier and a generation timestamp.
- Generating a contextual line checksum by applying a cryptographic hash to a combination of the artifact and the metadata.
- Querying a second database using the artifact's content contextual line checksum to determine whether the artifact has previously been committed.
- Generating a provenance tracking record if no matching checksum is found, or marking the artifact as previously committed if the checksum is present.

In one implementation, generating the contextual line checksum may comprise concatenating the literal content of the artifact with the user identifier and timestamp in a predefined order, and applying a cryptographic hash function (e.g., SHA-256) to the resulting string.

In further embodiments, a file-level checksum may be computed by aggregating multiple contextual line checksums associated with a set of related artifacts (e.g., lines in a configuration file). The file-level checksum may then be recorded on a blockchain ledger to provide immutable provenance anchoring.

In one specific implementation, the file-level checksum may be derived by first ordering the contextual line checksums according to the sequence of their corresponding artifacts and then applying a cryptographic hash to the ordered sequence.

In another example, the file-level checksum may be further associated with a project identifier and a version identifier, and the resulting provenance bundle may be stored in association with a project-level record. This enables project-level traceability, supporting the ability to track the full lineage of model-generated content within the context of software releases or data science projects.

Additionally, in certain embodiments, the system may identify an artifact as reuse-sensitive content if the contextual line checksum corresponds to multiple metadata entries, indicating that the same artifact was generated across different users or at different times. This classification may help prioritize content for review, especially where repetition may introduce copyright or compliance concerns.

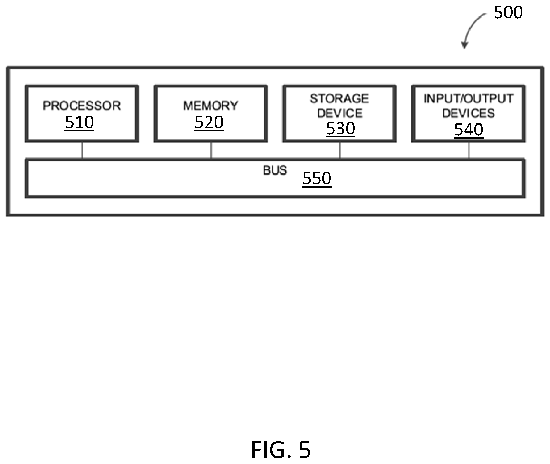

**FIG. 5** depicts a block diagram illustrating a computing system **500** consistent with implementations of the current subject matter. As shown in **FIG. 5****,** the computing system **500** can include a processor **510,** a memory **520,** a storage device **530,** and input/output devices **540.** The processor **510,** the memory **520,** the storage device **530,** and the input/output devices **540** can be interconnected via a system bus **550.** The computing system **500** may additionally or alternatively include a graphic processing unit (GPU), such as for image processing, and/or an associated memory for the GPU. The GPU and/or the associated memory for the GPU may be interconnected via the system bus **550** with the processor **510,** the memory **520,** the storage device **530,** and the input/output devices **540.** The memory associated with the GPU may store one or more images described herein, and the GPU may process one or more of the images described herein. The GPU may be coupled to and/or form a part of the processor **510.** The processor **510** is capable of processing instructions for execution within the computing system **500.** In some implementations of the current subject matter, the processor **510** can be a single-threaded processor. Alternately, the processor **510** can be a multi-threaded processor. The processor **510** is capable of processing instructions stored in the memory **520** and/or on the storage device **530** to display graphical information for a user interface provided via the input/output device **540.**

The memory **520** is a computer-readable medium, such as volatile or non-volatile memory, that stores information within the computing system **500.** The memory **520** can store data structures representing configuration object databases, for example. The storage device **530** is capable of providing persistent storage for the computing system **500.** The storage device **530** can be a floppy disk device, a hard disk device, an optical disk device, or a tape device, or other suitable persistent storage means. The input/output device **540** provides input/output operations for the computing system **500.** In some implementations of the current subject matter, the input/output device **540** includes a keyboard and/or pointing device. In various implementations, the input/output device **540** includes a display unit for displaying graphical user interfaces.

According to some implementations of the current subject matter, the input/output device **540** can provide input/output operations for a network device. For example, the input/output device **540** can include Ethernet ports or other networking ports to communicate with one or more wired and/or wireless networks (e.g., a local area network (LAN), a wide area network (WAN), the Internet).

In some implementations of the current subject matter, the computing system **500** can be used to execute various interactive computer software applications that can be used for organization, analysis and/or storage of data in various (e.g., tabular) format (e.g., Microsoft Excel^{®}, and/or any other type of software). Alternatively, the computing system 1000 can be used to execute any type of software applications. These applications can be used to perform various functionalities, e.g., planning functionalities (e.g., generating, managing, editing of spreadsheet documents, word processing documents, and/or any other objects, etc.), computing functionalities, communications functionalities, etc. The applications can include various add-in functionalities or can be standalone computing products and/or functionalities. Upon activation within the applications, the functionalities can be used to generate the user interface provided via the input/output device **540**. The user interface can be generated and presented to a user by the computing system **500** (e.g., on a computer screen monitor, etc.).

One or more aspects or features of the subject matter described herein can be realized in digital electronic circuitry, integrated circuitry, specially designed framework specific integrated circuits (ASICs), field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software frameworks, frameworks, components, or code, include machine instructions for a programmable processor, and can be implemented in a high-level procedural language, an object-oriented programming language, a functional programming language, a logical programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example as would a processor cache or other random access memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including, but not limited to, acoustic, speech, or tactile input. Other possible input devices include, but are not limited to, touch screens or other touch-sensitive devices such as single or multi-point resistive or capacitive trackpads, voice recognition hardware and software, optical scanners, optical pointers, digital image capture devices and associated interpretation software, and the like.
**Use Case:** Traceability and Provenance Recording for Model-Generated Artifacts in an Enterprise Workflow.

Organizations in regulated sectors such as finance, healthcare, and cybersecurity are increasingly integrating generative artificial intelligence (GenAI) tools to accelerate development cycles, enhance productivity, and streamline the creation of software-based artifacts. In many such environments, structured workflows now incorporate the use of large language models (LLMs) or focused language models (FLMs) to assist with generation tasks that involve assembling structured machine-generated elements, such as logical expressions, configuration patterns, or parameterized structures intended for inclusion in production environments.

This use case describes how the approach described herein may be operationalized in a typical enterprise scenario involving a digital solution referred to as the "fraud detection platform for Client XYZ." In this example, an internal team of developers and domain experts leverages a locally deployed LLM assistant to generate segments of a system artifact designed to detect and flag anomalous transaction behavior. The resulting artifact comprises multiple lines of structured, machine-generated content, including conditional logic, entity definitions, and templated expressions.

To enable provenance traceability for the generated content and support potential downstream auditing, ownership assertions, or compliance verification, the system executes the following operations.

### 1. Receiving and Fingerprinting Generated Content

Each segment produced by the generative model-such as a line of structured syntax or expression-is treated as a machine-generated artifact. For every such artifact, the system generates a content-based checksum, defined as a cryptographic hash computed solely from the textual content of the artifact. This checksum acts as a compact and unique fingerprint, allowing artifacts to be tracked independently of their formatting or file location.

The content-based checksum is used to query a first database that maintains a collection of historical model outputs previously recorded by the system. If the checksum is not found in the database, the artifact is considered novel and a new entry is created. If the checksum already exists, the system appends a metadata record to the corresponding database entry. This metadata may include, for example, a user identifier and a generation timestamp, representing the identity of the user who triggered the model output and the time at which the artifact was produced.

### 2. Assessing Commonality and Marking Candidates for Tracking

To assess whether the artifact corresponds to standardized syntax or common constructs that do not require provenance verification, the system consults a predefined database of common syntax patterns. These patterns may include language-level keywords, formatting conventions, or widely used logic expressions that appear in public documentation and are unlikely to raise originality concerns.

If an artifact matches a known common pattern, it may be flagged accordingly and excluded from further tracking. Otherwise, if the artifact is not part of the common set and has been observed more than once-i.e., associated with multiple metadata entries from different users or times-the artifact may be classified as reuse-sensitive content. In this context, reuse-sensitive content refers to a machine-generated artifact that has been generated more than once by different users or under different conditions, and may therefore require downstream evaluation or tracking.

### 3. Constructing Contextual Line Checksums

For each artifact marked as reuse-sensitive or otherwise designated for tracking, the system generates a contextual line checksum. In some embodiments, a contextual line checksum, also referred to as a super checksum (SCS) may be generated by applying a cryptographic hash function to a combination of the artifact content and associated metadata elements, such as one or more user identifiers and generation timestamps. This checksum incorporates both semantic and contextual provenance information, allowing the system to uniquely fingerprint the generation context of each artifact.

For example, if a single artifact has been generated twice-once by User A at Time 1 and once by User B at Time 2-the contextual line checksum may be computed by hashing the concatenation of: $\left[artifact text\right] + \left[User A\right] + \left[Time 1\right] + \left[User B\right] + \left[Time 2\right]$

The resulting checksum reflects both the content and its generative lineage.

### 4. Computing and Recording File-Level Checksums

Upon completion of the generation workflow for a full document or system-level artifact, the system aggregates the contextual line checksums corresponding to each tracked line or segment. These individual checksums are ordered based on the sequence of artifacts in the composite structure and then concatenated into a single string. A file-level checksum (FCS) is then generated by applying a cryptographic hash function to this ordered sequence.

The file-level checksum serves as a compact digital representation of the entire artifact, capturing not only its content but also its generation history. This FCS may be associated with a project identifier and a version identifier to form a provenance bundle, which uniquely defines the state of the generated artifact at a specific release point in time.

The provenance bundle may then be recorded on a data and model governance blockchain managed by the organization. The blockchain record provides immutable anchoring of the artifact's state, allowing future validation that the artifact has not been altered since the time of recording. If the same FCS is observed again-for example, if the artifact is reused in a different project or version-the system appends a new entry to the existing blockchain block, preserving the temporal sequence of events without overwriting historical data.

### 5. Enabling Audit, Governance, and Rights Management

The traceability mechanisms described above allow enterprise users to verify which machine-generated artifacts have been generated by a model, when they were produced, and by whom. This information may support a variety of use cases, including:
- Demonstrating originality or authorship of composite artifacts;
- Verifying whether specific segments were reused across projects;
- Supporting internal audit teams in distinguishing generative outputs from human contributions;
- Preparing disclosure documentation for intellectual property rights filings;
- Detecting improper reuse of generated artifacts across teams or external contributors.

By incorporating contextual fingerprinting, reuse classification, and blockchain-based anchoring, the system offers a comprehensive solution for organizations seeking to operationalize responsible use of generative models while maintaining provenance traceability and integrity of their software development lifecycle.

In the descriptions above and in the claims, phrases such as "at least one of" or "one or more of" may occur followed by a conjunctive list of elements or features. The term "and/or" may also occur in a list of two or more elements or features. Unless otherwise implicitly or explicitly contradicted by the context in which it used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." Use of the term "based on," above and in the claims is intended to mean, "based at least in part on," such that an unrecited feature or element is also permissible.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. Other implementations may be within the scope of the following claims.

In view of the above, the present application discloses aspects and/or embodiments as described in the following itemized list
1. A computer-implemented method for provenance identification of machine-generated artifacts, the method comprising:
   generating a content-based checksum for a piece of machine-generated artifact, wherein the content-based checksum is a cryptographic hash computed for the machine-generated artifact;
   querying a first database using the content-based checksum to determine whether the artifact corresponds to previously recorded generated content, wherein the first database stores a plurality of content-based checksums corresponding to machine-generated artifacts previously generated by one or more models;
   in response to detecting a match in the first database, determining whether the artifact corresponds to a predefined set of common syntax patterns; and
   in response to determining that the artifact does not correspond to a common syntax pattern, marking the machine-generated artifact for provenance tracking by associating the artifact with one or more provenance metadata fields.
2. The method of item 1, further comprising:
   retrieving metadata associated with the machine-generated artifact, the metadata comprising at least a user identifier and a generation timestamp;
   generating a contextual line checksum by applying a cryptographic hash to a combination of the machine-generated artifact and the retrieved metadata;
   querying a second database using the contextual line checksum to determine whether the artifact has previously been committed to a provenance tracking record, wherein the second database stores contextual line checksums corresponding to previously committed artifacts, and
   generating a provenance tracking record for the machine-generated artifact, in response to determining that the contextual line checksum does not exist in the second database, and marking the machine-generated artifact as previously committed, in response to detecting that the contextual line checksum exists in the second database.
3. The method of item 2, wherein generating the contextual line checksum comprises:
   concatenating textual content of the machine-generated artifact with a user identifier and a generation timestamp in a predefined order to form an input string; and
   applying a cryptographic hash function to the input string.
4. The method of item 2 or 3, further comprising:
   generating a file-level checksum based on a plurality of contextual line checksums corresponding to a set of machine-generated artifacts, and
   recording the file-level checksum on a blockchain ledger to provide immutable provenance verification for the set of machine-generated artifacts.
5. The method of item 4, wherein generating the file-level checksum comprises:
   ordering the plurality of contextual line checksums based on a predefined sequence of the corresponding machine-generated artifacts; and
   applying a cryptographic hash function to the ordered sequence to produce the file-level checksum.
6. The method of item 4 or 5, further comprising:
   associating the file-level checksum with a project identifier and a version identifier to form a provenance bundle corresponding to a composite artifact; and
   storing the provenance bundle in association with a project-level record to enable project-level traceability.
7. The method of any one of items 2 to 6, further comprising:
   identifying the machine-generated artifact as reuse-sensitive content, in response to determining that the contextual line checksum corresponds to multiple metadata entries indicating generation of a same artifact by multiple users or at multiple timestamps.
8. A system for provenance identification of machine-generated artifacts comprising:
   at least one programmable processor; and
   a non-transient machine-readable medium storing instructions that, when executed by the processor, cause the at least one programmable processor to perform operations comprising:
      generating a content-based checksum for a piece of machine-generated artifact, wherein the content-based checksum is a cryptographic hash computed for the machine-generated artifact;
      querying a first database using the content-based checksum to determine whether the artifact corresponds to previously recorded generated content, wherein the first database stores a plurality of content-based checksums corresponding to machine-generated artifacts previously generated by one or more models;
      in response to detecting a match in the first database, determining whether the artifact corresponds to a predefined set of common syntax patterns; and
      in response to determining that the artifact does not correspond to a common syntax pattern, marking the machine-generated artifact for provenance tracking by associating the artifact with one or more provenance metadata fields.
9. The system of item 8, the operations further comprise:
   retrieving metadata associated with the machine-generated artifact, the metadata comprising at least a user identifier and a generation timestamp;
   generating a contextual line checksum by applying a cryptographic hash to a combination of the machine-generated artifact and the retrieved metadata,
   querying a second database using the contextual line checksum to determine whether the artifact has previously been committed to a provenance tracking record, wherein the second database stores contextual line checksums corresponding to previously committed artifacts, and
   generating a provenance tracking record for the machine-generated artifact, in response to determining that the contextual line checksum does not exist in the second database, and marking the machine-generated artifact as previously committed, in response to detecting that the contextual line checksum exists in the second database.
10. The system of item 9, wherein generating the contextual line checksum comprises:
   concatenating textual content of the machine-generated artifact with a user identifier and a generation timestamp in a predefined order to form an input string; and
   applying a cryptographic hash function to the input string.
11. The system of item 9 or 10, wherein the operations further comprise:
   generating a file-level checksum based on a plurality of contextual line checksums corresponding to a set of machine-generated artifacts, and
   recording the file-level checksum on a blockchain ledger to provide immutable provenance verification for the set of machine-generated artifacts.
12. The system of any one of item 11, wherein generating the file-level checksum comprises:
   ordering the plurality of contextual line checksums based on a predefined sequence of the corresponding machine-generated artifacts; and
   applying a cryptographic hash function to the ordered sequence to produce the file-level checksum.
13. The system of any one of items 11 to 12, wherein the operations further comprise:
   associating the file-level checksum with a project identifier and a version identifier to form a provenance bundle corresponding to a composite artifact; and
   storing the provenance bundle in association with a project-level record to enable project-level traceability.
14. The system of any one of items 9 to 13, wherein the operations further comprise:
   identifying the machine-generated artifact as reuse-sensitive content, in response to determining that the contextual line checksum corresponds to multiple metadata entries indicating generation of a same artifact by multiple users or at multiple timestamps.
15. A computer program product, for provenance identification of machine-generated artifacts, comprising a non-transient machine-readable medium storing instructions that, when executed by at least one programmable processor, cause the at least one programmable processor to perform operations comprising:
   generating a content-based checksum for a piece of machine-generated artifact, wherein the content-based checksum is a cryptographic hash computed for the machine-generated artifact;
   querying a first database using the content-based checksum to determine whether the artifact corresponds to previously recorded generated content, wherein the first database stores a plurality of content-based checksums corresponding to machine-generated artifacts previously generated by one or more models;
   in response to detecting a match in the first database, determining whether the artifact corresponds to a predefined set of common syntax patterns; and
   in response to determining that the artifact does not correspond to a common syntax pattern, marking the machine-generated artifact for provenance tracking by associating the artifact with one or more provenance metadata fields.
16. The computer program product of item 15, the operations further comprise:
   retrieving metadata associated with the machine-generated artifact, the metadata comprising at least a user identifier and a generation timestamp;
   generating a contextual line checksum by applying a cryptographic hash to a combination of the machine-generated artifact and the retrieved metadata,
   querying a second database using the contextual line checksum to determine whether the artifact has previously been committed to a provenance tracking record, wherein the second database stores contextual line checksums corresponding to previously committed artifacts, and
   generating a provenance tracking record for the machine-generated artifact, in response to determining that the contextual line checksum does not exist in the second database, and marking the machine-generated artifact as previously committed, in response to detecting that the contextual line checksum exists in the second database.
17. The computer program product of item 16, wherein generating the contextual line checksum comprises:
   concatenating textual content of the machine-generated artifact with a user identifier and a generation timestamp in a predefined order to form an input string; and
   applying a cryptographic hash function to the input string.
18. The computer program product of item 16 or 17, wherein the operations further comprise:
   generating a file-level checksum based on a plurality of contextual line checksums corresponding to a set of machine-generated artifacts, and
   recording the file-level checksum on a blockchain ledger to provide immutable provenance verification for the set of machine-generated artifacts.
19. The computer program product of item 18, wherein generating the file-level checksum comprises:
   ordering the plurality of contextual line checksums based on a predefined sequence of the corresponding machine-generated artifacts; and
   applying a cryptographic hash function to the ordered sequence to produce the file-level checksum.
20. The computer program product of item 18 or 19, wherein the operations further comprise:
   associating the file-level checksum with a project identifier and a version identifier to form a provenance bundle corresponding to a composite artifact; and
   storing the provenance bundle in association with a project-level record to enable project-level traceability.

## Claims

1. A computer-implemented method for provenance identification of machine-generated artifacts, the method comprising:
generating a content-based checksum for a piece of machine-generated artifact, wherein the content-based checksum is a cryptographic hash computed for the machine-generated artifact;
querying a first database using the content-based checksum to determine whether the artifact corresponds to previously recorded generated content, wherein the first database stores a plurality of content-based checksums corresponding to machine-generated artifacts previously generated by one or more models;
in response to detecting a match in the first database, determining whether the artifact corresponds to a predefined set of common syntax patterns; and
in response to determining that the artifact does not correspond to a common syntax pattern, marking the machine-generated artifact for provenance tracking by associating the artifact with one or more provenance metadata fields.

2. The method of claim 1, further comprising:
retrieving metadata associated with the machine-generated artifact, the metadata comprising at least a user identifier and a generation timestamp;
generating a contextual line checksum by applying a cryptographic hash to a combination of the machine-generated artifact and the retrieved metadata;
querying a second database using the contextual line checksum to determine whether the artifact has previously been committed to a provenance tracking record, wherein the second database stores contextual line checksums corresponding to previously committed artifacts, and
generating a provenance tracking record for the machine-generated artifact, in response to determining that the contextual line checksum does not exist in the second database, and marking the machine-generated artifact as previously committed, in response to detecting that the contextual line checksum exists in the second database.

3. The method of claim 2,
wherein generating the contextual line checksum comprises: concatenating textual content of the machine-generated artifact with a user identifier and a generation timestamp in a predefined order to form an input string; and applying a cryptographic hash function to the input string; and/or
wherein the method further comprises: identifying the machine-generated artifact as reuse-sensitive content, in response to determining that the contextual line checksum corresponds to multiple metadata entries indicating generation of a same artifact by multiple users or at multiple timestamps.

4. The method of claim 2 or 3, further comprising:
generating a file-level checksum based on a plurality of contextual line checksums corresponding to a set of machine-generated artifacts, and
recording the file-level checksum on a blockchain ledger to provide immutable provenance verification for the set of machine-generated artifacts.

5. The method of claim 4,
wherein generating the file-level checksum comprises:
ordering the plurality of contextual line checksums based on a predefined sequence of the corresponding machine-generated artifacts; and
applying a cryptographic hash function to the ordered sequence to produce the file-level checksum; and/or
wherein the method further comprises:
associating the file-level checksum with a project identifier and a version identifier to form a provenance bundle corresponding to a composite artifact; and
storing the provenance bundle in association with a project-level record to enable project-level traceability.

6. A system for provenance identification of machine-generated artifacts comprising:
at least one programmable processor; and
a non-transient machine-readable medium storing instructions that, when executed by the processor, cause the at least one programmable processor to perform operations comprising:
generating a content-based checksum for a piece of machine-generated artifact, wherein the content-based checksum is a cryptographic hash computed for the machine-generated artifact;
querying a first database using the content-based checksum to determine whether the artifact corresponds to previously recorded generated content, wherein the first database stores a plurality of content-based checksums corresponding to machine-generated artifacts previously generated by one or more models;
in response to detecting a match in the first database, determining whether the artifact corresponds to a predefined set of common syntax patterns; and
in response to determining that the artifact does not correspond to a common syntax pattern, marking the machine-generated artifact for provenance tracking by associating the artifact with one or more provenance metadata fields.

7. The system of claim 6, the operations further comprise:
retrieving metadata associated with the machine-generated artifact, the metadata comprising at least a user identifier and a generation timestamp;
generating a contextual line checksum by applying a cryptographic hash to a combination of the machine-generated artifact and the retrieved metadata,
querying a second database using the contextual line checksum to determine whether the artifact has previously been committed to a provenance tracking record, wherein the second database stores contextual line checksums corresponding to previously committed artifacts, and
generating a provenance tracking record for the machine-generated artifact, in response to determining that the contextual line checksum does not exist in the second database, and marking the machine-generated artifact as previously committed, in response to detecting that the contextual line checksum exists in the second database.

8. The system of claim 7,
wherein generating the contextual line checksum comprises: concatenating textual content of the machine-generated artifact with a user identifier and a generation timestamp in a predefined order to form an input string; and applying a cryptographic hash function to the input string; and/or
wherein the operations further comprise: identifying the machine-generated artifact as reuse-sensitive content, in response to determining that the contextual line checksum corresponds to multiple metadata entries indicating generation of a same artifact by multiple users or at multiple timestamps.

9. The system of claim 7 or 8, wherein the operations further comprise:
generating a file-level checksum based on a plurality of contextual line checksums corresponding to a set of machine-generated artifacts, and
recording the file-level checksum on a blockchain ledger to provide immutable provenance verification for the set of machine-generated artifacts.

10. The system of claim 9,
wherein generating the file-level checksum comprises:
ordering the plurality of contextual line checksums based on a predefined sequence of the corresponding machine-generated artifacts; and
applying a cryptographic hash function to the ordered sequence to produce the file-level checksum; and/or
wherein the operations further comprise:
associating the file-level checksum with a project identifier and a version identifier to form a provenance bundle corresponding to a composite artifact; and
storing the provenance bundle in association with a project-level record to enable project-level traceability.

11. A computer program product, for provenance identification of machine-generated artifacts, comprising a non-transient machine-readable medium storing instructions that, when executed by at least one programmable processor, cause the at least one programmable processor to perform operations comprising:
generating a content-based checksum for a piece of machine-generated artifact, wherein the content-based checksum is a cryptographic hash computed for the machine-generated artifact;
querying a first database using the content-based checksum to determine whether the artifact corresponds to previously recorded generated content, wherein the first database stores a plurality of content-based checksums corresponding to machine-generated artifacts previously generated by one or more models;
in response to detecting a match in the first database, determining whether the artifact corresponds to a predefined set of common syntax patterns; and
in response to determining that the artifact does not correspond to a common syntax pattern, marking the machine-generated artifact for provenance tracking by associating the artifact with one or more provenance metadata fields.

12. The computer program product of claim 11, the operations further comprise:
retrieving metadata associated with the machine-generated artifact, the metadata comprising at least a user identifier and a generation timestamp;
generating a contextual line checksum by applying a cryptographic hash to a combination of the machine-generated artifact and the retrieved metadata,
querying a second database using the contextual line checksum to determine whether the artifact has previously been committed to a provenance tracking record, wherein the second database stores contextual line checksums corresponding to previously committed artifacts, and
generating a provenance tracking record for the machine-generated artifact, in response to determining that the contextual line checksum does not exist in the second database, and marking the machine-generated artifact as previously committed, in response to detecting that the contextual line checksum exists in the second database.

13. The computer program product of claim 12, wherein generating the contextual line checksum comprises:
concatenating textual content of the machine-generated artifact with a user identifier and a generation timestamp in a predefined order to form an input string; and applying a cryptographic hash function to the input string.

14. The computer program product of claim 13, wherein the operations further comprise:
generating a file-level checksum based on a plurality of contextual line checksums corresponding to a set of machine-generated artifacts, and
recording the file-level checksum on a blockchain ledger to provide immutable provenance verification for the set of machine-generated artifacts.

15. The computer program product of claim 14,
wherein generating the file-level checksum comprises: ordering the plurality of contextual line checksums based on a predefined sequence of the corresponding machine-generated artifacts; and applying a cryptographic hash function to the ordered sequence to produce the file-level checksum; and/or
wherein the operations further comprise: associating the file-level checksum with a project identifier and a version identifier to form a provenance bundle corresponding to a composite artifact; and storing the provenance bundle in association with a project-level record to enable project-level traceability.
